# EUROPEAN PATENT SPECIFICATION

(11) **EP 2 363 009 B1**
(45) Date of publication and mention of the grant of the patent: **04.01.2017**
(21) Application number: 08876279.4
(22) Date of filing: 06.11.2008
(51) Int. Cl.: H04W 72/12, H04L 1/16

(54) **METHOD AND ARRANGEMENT IN A COMMUNICATION SYSTEM FOR EXCHANGING A STATUS REPORT**
VERFAHREN UND ANORDNUNG IN EINEM KOMMUNIKATIONSSYSTEM ZUM AUSTAUSCHEN EINES STATUSBERICHTS
PROCÉDÉ ET AGENCEMENT DANS UN SYSTÈME DE COMMUNICATION PERMETTANT D'ÉCHANGER UN RAPPORT D'ÉTAT

(43) Date of publication of application: 07.09.2011
(73) Proprietor: Telefonaktiebolaget LM Ericsson (publ), 164 83 Stockholm (SE)
(72) Inventor: LARMO, Anna, FI-02600 Espoo (FI); WIBERG, Niclas, S-585 97 Linköping (SE); ROSIN, Olle, 58437 Linkoping (SE)
(74) Representative: Hoffmann Eitle
(86) International application number: PCT/SE2008/051268
(87) International publication number: WO 2010/053414

(56) References cited:
- EP-A- 1 263 159
- EP-A- 1 689 134
- EP-A- 1 755 355
- WO-A-2005/086406
- US-A1- 2006 067 238

## Description

### TECHNICAL FIELD

The present subject matter relates to methods and arrangements in a first node comprised in a wireless communication system. In particular it relates to a mechanism for controlling a transmission of data units within the wireless communication system.

### BACKGROUND

The transmission quality of a wireless communication and/or coherence properties of a communication channel between two nodes, such as e.g. base station and user equipment within a wireless communication system may differ, depending on a plurality of unwanted influence on the signal and the radio propagation conditions. Some non limiting examples of such unwanted influence may be e.g. thermal noise and interference and some examples of phenomena that adversely affect the propagation conditions are path loss, signal multi-path, and Doppler spread. Further the accuracy of channel estimation will affect the transmission quality. Thus data units such as e.g. Packet Data Units (PDUs) sent from one node may arrive at the receiving node in disorder, distorted or not at all.

It may then be necessary for the sending node to resend lost or distorted PDUs to the receiving node. In order to perform a resending, the sending node in some way has to be informed which data, if any, to resend to the receiving node.

One mechanism that may be used in order for the sending node to know if data has to be resent is to poll the receiving node to send a status report back to the sending node.

The 3rd generation partnership program (3GPP) is currently standardizing a new radio access system called the Long Term Evolution (LTE) of 3G, also denoted evolved UTRAN (E-UTRAN).

Just as some preceding systems, such as e.g. UMTS Terrestrial Radio Access Network (UTRAN), this system E-UTRAN will include radio protocols intended to minimize the loss of data over the radio link. One of these protocols is the Radio Link Control (RLC) protocol. The RLC is considered to be a second layer protocol. One of the most important functions of RLC is to cover for the residual errors caused by the lower layer protocols, in the acknowledged mode (RLC AM).

The RLC AM operation includes the sending of PDUs over the radio interface carrying higher layer data, reordering of those PDUs in the receiver side, detecting lost PDUs, and requesting retransmissions for those PDUs that are considered lost. The retransmissions are requested with a special control PDU, called a STATUS PDU, or simply a STATUS.

The STATUS is triggered when so requested by the transmitter with a special POLL bit, or when a missing PDU is detected. A status prohibit timer can be started whenever a STATUS message is transmitted, to prohibit a new STATUS to be transmitted within a certain time after the previous.

In UMTS Terrestrial Radio Access Network (UTRAN), the STATUS messages were formed when triggered, or upon timer expiry, and then buffered for transmission at the next possible instant. This made it possible for the sender to know exactly the amount of data available for immediate transmission, including both user data and buffered STATUS messages. Further, it allowed the splitting of an RLC AM entity, e.g. in the base station, into a sender and a receiver. The sender and the receiver might then potentially be physically separated. Thus the receiver might generate the STATUS messages, using its information about received PDUs, and forward it to the sender.

Other simplifying aspects of UTRAN Rel6 RLC, is that the STATUS PDU size was also known to match the PDU size of the logical channel on which it was to be transmitted on.

The E-UTRAN RLC protocol is different from the UTRAN RLC in several aspects. In particular, the STATUS should be formed at the latest possible moment before the transmission over the air interface. Since the RLC protocol does not itself decide on transmission times over the air interface, there is a possibility to have a delay between the time the STATUS is generated, due to a received trigger and the time when the STATUS actually can be transmitted over the air.

In E-UTRAN, it is thus not possible to just form and send the STATUS PDUs to the lower layer as they are generated, since the STATUS should be formed only when a transmission possibility is available, i.e. at the latest possible moment before transmission. Further, the STATUS PDU size varies depending on how many Non-Acknowledgements (NACKs) are sent, and whether they are for Acknowledged Mode Data (AMD) PDUs that are full PDUs or segments of PDUs. This creates further problems, because the lower layer requires information of the STATUS PDU size in order to reserve transmission resources.

Yet a problem with this is related to uplink STATUS transmissions, in combination with buffer status reporting and scheduling. The radio uplink is the transmission path from the user equipment, e.g. Cell Phone, to a Base Station e.g. eNodeB. Uplink transmission is initiated by a buffer status report being triggered in the Medium Access Control (MAC) layer in the user equipment. This results in a request being sent to the base station. After receiving the request, the base station schedules resources for uplink transmission and sends a suitable grant to the user equipment. At reception of the grant, the user equipment MAC layer requests data from the RLC layer and generates the actual uplink transmission.

For this process to work, it is necessary that the triggering of a STATUS PDU in RLC is immediately recognized by MAC, so that MAC can request transmission resources from the base station. The delay caused by the request is typically at least 8 ms, and during this period the RLC state can have been significantly changed. This may cause the actual transmitted STATUS PDU to be different than the actual STATUS PDU that would be generated at the time of transmission.

Thus, it appears that a first STATUS PDU must be generated at a first time when it is triggered and at a second time just before it is sent to the eNodeB. But the time between these two events may be shorter than the status prohibit time, which governs how often a STATUS PDU may be sent. A possible solution may be to set the status prohibit time to a very low value, or turn off the status prohibit time functionality. However, this may result in unnecessary sent STATUS PDUs, as previously discussed.

A related problem occurs when splitting an RLC AM entity, in the base station side or in the user equipment into two parts, a sender and a receiver, as described above. The problem is that the receiver generates the STATUS PDUs, while the sender knows about their transmission time. This can be particularly troublesome in base stations, where it is often natural to split the entire hardware into a transmitter and a receiver, including the physical layer, MAC, RLC, and other protocol layers. In such an implementation, the scheduler and the transmitting MAC entity need to have up-to-date information about the amount of data available for transmission from each RLC entity before making its scheduling decision. This includes knowing if a STATUS PDU is available for transmission, and what size it has in that case. The real time requirements often make it impossible for the transmitting side to request such information from the RLC receiver when the information is needed. The natural solution is then to generate the STATUS message in the receiver when it is triggered, and then buffer it in the sender until it could be transmitted, but this is not suitable since the STATUS should be generated immediately before transmission.

The user access quality and overall system capacity in a wireless communication network environment is affected by data loss and protocol stalling, but also by unnecessary polls and resending of data.

WO 2005/086406 A1 relates to methods and devices for generation of a compressed status report that is updated to indicate later received data. A first status report is generated based on initial data received previously, such as from a mobile communications device or network and is then compressed to generate a first compressed status report. This report can be updated to generate a second compressed status report based on further data received after beginning the compressing.

EP 1 689 134 A2 relates to a method and apparatus for requesting/transmitting status reports of a mobile communication system. The method is provided for reducing excessive retransmission delays which may occur due to the loss of a packet of a transmission buffer in a radio link control (RLC) layer of a mobile communication system.

US 2006/0067238 A1 relates to data unit management in communications. A mechanism is provided for detecting missing or corrupted data units at the receiving end of a transmission link, and requesting transmission as well as monitoring the response to a retransmission request. Further, a status report retransmission state variable indicating the number of times a status report has been retransmitted is provided and updated by a counter provided on the receiving side.

### SUMMARY

It is therefore the object to obviate at least some of the above disadvantages and provide an improved wireless communication system.

This is achieved by the independent claims. Advantageous embodiments are described in the dependent claims.

According to a first aspect, the object is achieved by a method in a first node for controlling a transmission of data units over a radio link between the first node and a second node. The first node and the second node are comprised in a wireless communication system. The method comprises receiving data units from the second node. The method also comprises detecting if any data units, expected to have been received from the second node, are unreceived. Further, the method comprises generating a status report, based on the made detection concerning unreceived data units. Further yet, the method comprises buffering the generated status report in a buffer. Still further, the method comprises updating the buffered status report when a change concerning either received data units or unreceived data units is detected. In addition, the method comprises receiving a request for a status report from the second node. Also, the method further comprises transmitting the generated status report to the second node, as a response to the received request for a status report.

According to a second aspect, the object is achieved by an arrangement in a first node for controlling a transmission of data units over a radio link between the first node and a second node. The first node and the second node are comprised in a wireless communication system. The arrangement comprises a receiver. The receiver is adapted to receive data units and requests for a status report respectively, from the second node. The arrangement also comprises a detecting unit. The detecting unit is adapted to detect if any data units, expected to have been received from the second node are unreceived. The arrangement further comprises a status report generating unit. The status report generating unit is adapted to generate a status report, based on the made detection concerning the unreceived data units. Further yet, the arrangement comprises a buffer. The buffer is adapted to buffer the generated status report. Still further, the arrangement comprises an updating unit. The updating unit is adapted to update the buffered status report when a change concerning either received data units or unreceived data units is detected. In addition, the arrangement comprises a transmitter. The transmitter is adapted to transmit the status report to the second node, as a response to the received request for a status report.

Thanks to the present methods and arrangements, the STATUS PDU size may be estimated before it is actually available. Also, the lower layer is provided with the latest possible status information in the form of a STATUS PDU once there is a transmission opportunity. This is done by generating and buffering a new STATUS PDU whenever the receive buffer has changed, and managing a trig counter to make sure that STATUS PDUs are only transmitted once. Thus it is avoided that a STATUS PDU is unnecessarily sent when a STATUS PDU has already recently been sent. Thus unnecessary signalling between the nodes comprised within the wireless communication system is reduced, which leads to reduced overhead signalling and thereby increased system capacity. Thus an improved performance of a wireless communication system is provided as a consequence of the present improved mechanism for controlling a transmission of data units within the wireless communication system.

An advantage of the present methods and arrangements is that it allows an implementation to separate the RLC sender and RLC receiver into two entities that need not have a tight real-time connection.

Other objects, advantages and novel features of the present methods and arrangements will become apparent from the following detailed description of the present methods and arrangements.

### BRIEF DESCRIPTION OF THE DRAWINGS

The present methods and arrangements will now be described more in detail in relation to the enclosed drawings, in which:
Figure 1 is a schematic block diagram illustrating embodiments of a wireless communication system.
Figure 2 is a block diagram illustrating embodiments of an entity situated in the first node, according to some embodiments.
Figure 3 is a combined flow chart and block diagram illustrating an embodiment of the present methods.
Figure 4 is a flow chart illustrating embodiments of the present methods.
Figure 5 is a block diagram illustrating embodiments of arrangements in a first node.

### DETAILED DESCRIPTION

The present methods and arrangements may be put into practice in the embodiments described below. These methods and arrangements may, however, be embodied in many different forms and should not be constructed as limited to the embodiments set forth herein; rather, these embodiments are provided so that this disclosure will be thorough and complete, and will fully convey the scope of the present methods and arrangements. It should be understood that there is no intent to limit the present methods and/or arrangements to any of the particular forms disclosed, but on the contrary, the present methods and arrangements is to cover all modifications, and alternatives falling within the scope of the present methods and arrangements as defined by the claims.

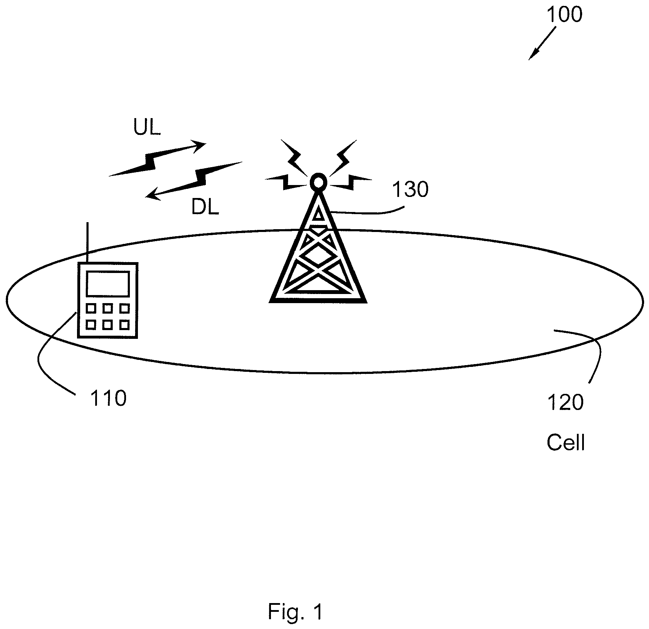

Figure 1 depicts a first node 110 communicating with a second node 130 in a wireless communication system 100. The communication between the first node 110 and the second node 130 may be made e.g. over a communication carrier in a cell 120 comprised in the wireless communication system 100.

It will be appreciated that the number of components illustrated in Figure 1 is purely exemplary. Other configurations with more, fewer, or a different arrangement of components may be implemented. Moreover, in some embodiments, one or more components in Figure 1 may perform one or more of the tasks described as being performed by one or more other components in Figure 1.

The wireless communication system 100 may also comprise a control node, according to some optional embodiments, depending on the technology used. The control node may be e.g. a Radio Network Controller.

The control node is a governing element in the wireless communication system 100, which may be responsible for the control of base stations e.g. the second node 130, which may be connected to the control node. The control node may carry out radio resource management and some of the mobility management functions.

In some embodiments, the first node 110 may be represented by e.g. user equipment (UE), a wireless communication terminal, a mobile cellular telephone, a Personal Communications Systems terminal, a Personal Digital Assistant (PDA), a laptop, a computer or any other kind of device capable of managing radio resources. A Personal Communication System terminal may combine a cellular radiotelephone with data processing, facsimile and data communications capabilities. A PDA may include a radiotelephone, a pager, an Internet/intranet access device, a web browser, an organizer, calendars etc.

The first node 110 may however in some embodiments be represented by a base station, such as e.g. an access point, a Node B, an evolved Node B (eNode B) and/or a base transceiver station, Access Point Base Station, base station router, etc depending e.g. of the radio access technology and terminology used.

The second node 130 may in some embodiments be referred to as e.g. a base station, an access point, a Node B, an evolved Node B (eNode B) and/or a base transceiver station, Access Point Base Station, base station router, etc depending e.g. of the radio access technology and terminology used.

Further, according to some embodiments, the second node 130 may be represented e.g. by user equipment (UE), a wireless communication terminal, a mobile cellular telephone, a Personal Communications Systems terminal, a Personal Digital Assistant (PDA), a laptop, a computer or any other kind of device capable of managing radio resources.

However, in the non limiting example depicted in Figure 1, the first node 110 is a mobile cellular telephone and the second node 130 is a base station.

The wireless communication system 100 may be based on technologies such as e.g. E-UTRAN (which is also known as LTE), Code division multiple access (CDMA), Wideband Code Division Multiple Access (WCDMA), CDMA 2000, High Speed Downlink Packet Data Access (HSDPA), High Speed Uplink Packet Data Access (HSUPA), High Data Rate (HDR), TD-SCDMA, etc.

As a non limiting example only and for purely illustrative purpose this description is written with the present methods and arrangements embodied in an E-UTRAN environment. However, the present methods and arrangements may be used also in other technology environments.

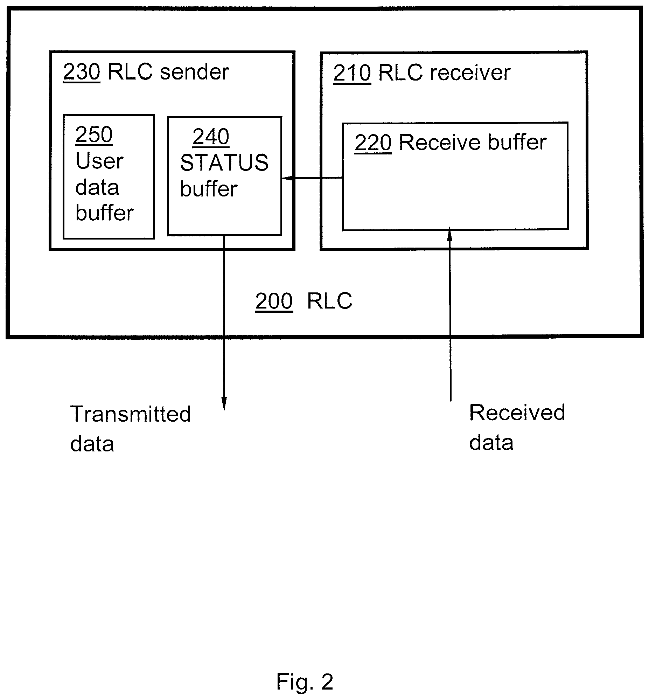

**Figure 2** is a block diagram illustrating embodiments of an RLC entity 200. The RLC entity 200 may be situated in the first node 110 and/or in the second node 130 within the wireless communication system 100, according to some embodiments.

The RLC entity 200 may, according to some embodiments, be split into an RLC receiver 210 and an RLC sender 230. However, according to other embodiments, the RLC receiver 210 and an RLC sender 230 may be kept together without changing the logic.

The RLC receiver 210 may comprise a receive buffer 220. The receive buffer 220 may be adapted to buffer received data.

The RLC sender 230 may comprise a STATUS buffer 240, adapted to buffer STATUS PDUs. Further, the RLC sender 230 may comprise a user data buffer 250. However, according to some embodiments, the STATUS buffer may reside on a lower layer. Further, according to some embodiments, the user data buffer 250 may alternatively be split between RLC SDU buffer and RLC PDU buffer.

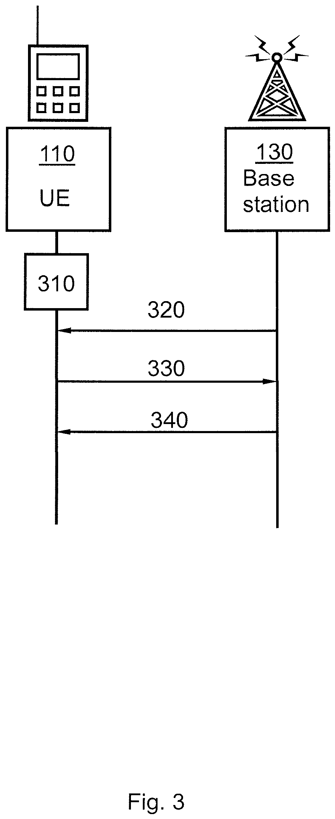

**Figure 3** is a combined signalling and flowchart that depicts method steps and the transmission of signals between the first node 110 and the second node 130 within the wireless communication system 100.

A general concept of the present methods and arrangements is to provide means in the actual implementation to solve the problem of estimating the STATUS PDU size before it is actually available, and then providing the lower layer with the latest possible status information in the form of a STATUS PDU once there is a transmission opportunity. This may be done by generating and buffering a new STATUS PDU in a STATUS buffer 240 whenever the receive buffer 220 has changed, and managing a trig counter to make sure that STATUS PDUs are only transmitted once. Thus one trigger can cause max one status transmission.

### 310

In this exemplary embodiment, the RLC receiver 210 and RLC sender 230 are situated within the first node 110.

The RLC receiver 210 generates a new STATUS PDU as soon as the status changes. The RLC receiver 210 may generate a new STATUS PDU e.g. every Transmission Time Interval (TTI), not only upon status trigger.

The generated STATUS PDU may then be forwarded from the RLC receiver 210 to the RLC sender 230.

The RLC sender 230 receives the forwarded new STATUS PDU for possible transmission, and buffers it in the STATUS buffer 240. The previous STATUS PDU that may be comprised in the STATUS buffer 240 may be overwritten by the new STATUS PDU.

Further, the RLC sender 230 manages a status prohibit timer, which status prohibit timer is adapted for timing the time periods between the transmitted STATUS PDUs, such that the STATUS PDUs are not transmitted too often.

Further yet, the RLC receiver 210 may attach a "trig counter" to each STATUS PDU. The trig counter is to be incremented every time a STATUS PDU is actually triggered. The STATUS PDU may be triggered due to e.g. a poll received from the second node 130, or a missing data unit.

The RLC sender 230 keeps track of the "trig counter" of the last transmitted STATUS PDU, but does not transmit a new status message with the same counter value. The trig counter may only be exchanged between the RLC receiver 210 and RLC sender 230 within the same node, according to some embodiments.

Whenever there is a buffered STATUS PDU with a trig counter different from the latest transmitted trig counter, and the status prohibit timer is not running, the RLC sender 230 may consider the buffered STATUS PDU available for transmission. Thus the size of the STATUS PDU may be included when reporting available data to MAC. As soon as there is an opportunity, the STATUS PDU may then be transmitted and the latest transmitted trig counter may be updated.

The "trig counter" thus may serve the purpose of preventing the sending of a STATUS PDU when it has not actually been triggered, since the RLC receiver 210 generates STATUS PDUs regardless if a trigger for generating a STATUS PDU has been received or not.

### 320

A poll is sent from the second node 130 to the first node 110.

### 330

The generated STATUS PDU is sent from the first node 110 to the second node 130, as a response to the poll.

### 340

The second node 130 receives the generated STATUS PDU and may use the status report to perform e.g. resending of lost data units.

A benefit with the above described procedure is that the RLC specification may be fulfilled in the implementation of the protocol into a real product. Thus it is also possible to realise an implementation with separated RLC sender 230 and RLC receiver 210 into two entities that need not have a tight real time connection.

Although the present methods and arrangements have been described for implementation in an evolved UTRAN (E-UTRAN) environment, similar principles may also be applicable e.g. for UTRAN when flexible RLC PDU sizes are introduced.

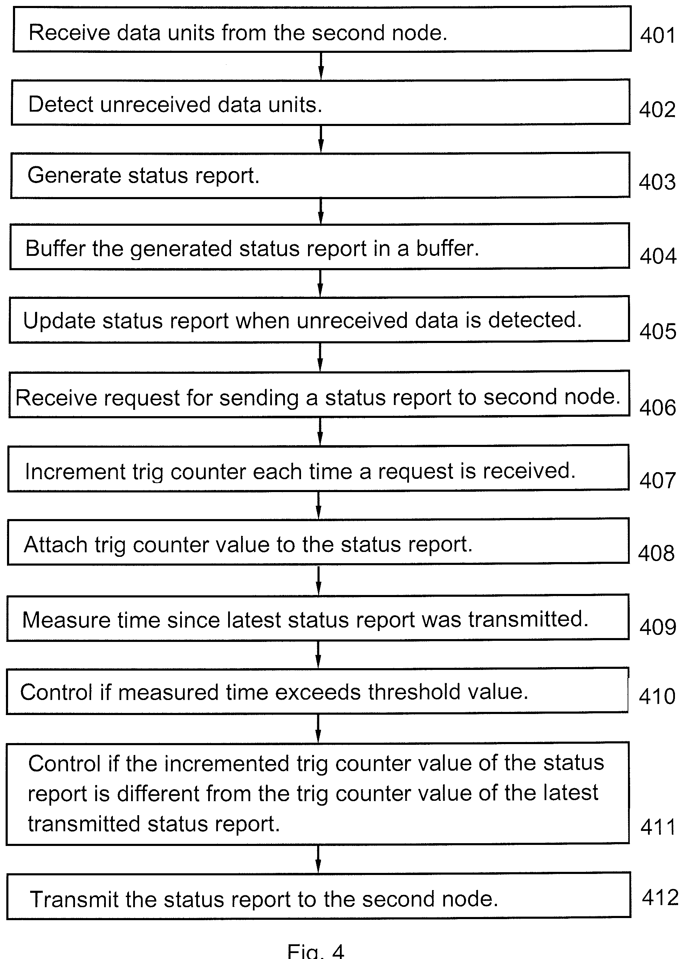

**Figure 4** is a flow chart illustrating embodiments of method steps 401-412 performed in a first node 110. The present methods aims at controlling a transmission of data units over a radio link between the first node 110 and a second node 130. The first node 110 and the second node 130 are comprised in a wireless communication system 100.

As previously discussed, the first node 110 may be a user terminal such as e.g. a mobile phone and the second node 130 may be a base station, such as e.g. an evolved NodeB (eNodeB). However, according to some embodiments, the first node 110 may be a base station and the second node 130 may be a user terminal.

To appropriately control the transmission of data units from the second node 130, the methods may comprise a number of method steps 401-412. It is however to be noted that some of the described method steps are optional and only comprised within some embodiments. Further, it is to be noted that the method steps 401-412 may be performed in any arbitrary chronological order and that some of them, e.g. step 409 and step 411, or even all steps may be performed simultaneously or in an altered, arbitrarily rearranged, decomposed or even completely reversed chronological order. The methods may comprise the following steps:

### Step 401

Data units are received from the second node 130. The data units may be e.g. Package Data Units, PDUs, according to some embodiments.

### Step 402

Detect if any data units, expected to have been received from the second node 130, are unreceived. Thus a control for lost data is performed.

### Step 403

A status report is generated, based on the made detection concerning unreceived data units.

### Step 404

The generated status report is buffered in a buffer 503.

### Step 405

The buffered status report is updated when a change concerning either received data units or unreceived data units is detected.

### Step 406

A request for a status report is received from the second node 130.

### Step 407

This step is optional and may only be comprised within some embodiments of the present methods. The first node 110 may, according to some embodiments comprise a trig counter 512, configured to count the number of status reports that has been sent as a response to received requests for status reports.

The trig counter value of the trig counter 512 may be incremented with one each time a status report is transmitted due to a received request.

### Step 408

This step is optional and may only be comprised within some embodiments of the present methods.

The incremented trig counter value may be attached to the buffered status report.

### Step 409

This step is optional and may only be comprised within some embodiments of the present methods.

The time that has passed since the latest status report was transmitted to the second node 130 may be measured. The measurement may be made e.g. by a timer comprised within the first node 110. According to some embodiments, the timer is reset to zero when a status report is transmitted.

### Step 410

This step is optional and may only be comprised within some embodiments of the present methods.

It may be controlled if the measured time exceeds a certain predetermined threshold value.

### Step 411

This step is optional and may only be comprised within some embodiments of the present methods.

It may be controlled if the incremented trig counter value of the status report is different from the trig counter value of the latest transmitted status report.

### Step 412

The generated status report is transmitted to the second node 130, as a response to the received request for a status report.

According to some optional embodiments, the generated status report is only transmitted to the second node 130 if certain conditions are fulfilled, such that a certain predetermined time has elapsed since the last status report where sent.

Further, according to some embodiments, the status report to the second node 130 is transmitted only if the measured time exceeds a certain predetermined threshold value and if the incremented trig counter value of the status report is different from the trig counter value of the latest transmitted status report.

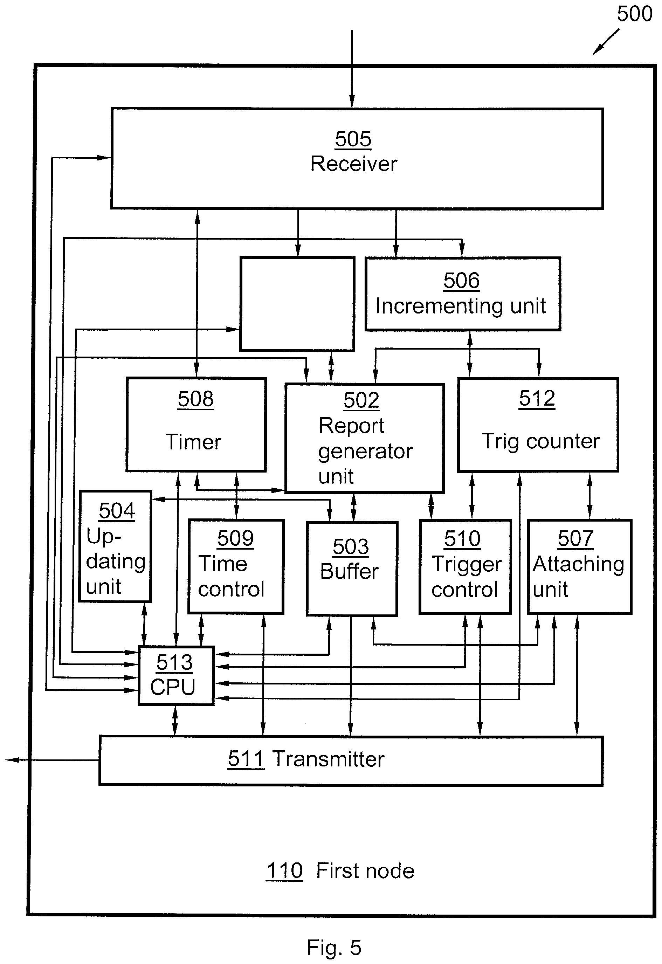

**Figure 5** is a block diagram illustrating embodiments of an arrangement 500 situated in the first node 110. The arrangement 500 is configured to perform the method steps 401-412 for controlling a transmission of data units over a radio link between the first node 110 and a second node 130. As mentioned above, the first node 110 and the second node 130 are both comprised within a wireless communication system 100.

The status report comprises positive and/or negative acknowledgement of data units sent from the second node 130 to be received by the first node 110. The first node 110, wherein the present arrangement 500 is comprised may be represented by user equipment such as e.g. a mobile phone, according to some embodiments. However, according to some embodiments, the first node 110 may be represented by a base station such as e.g. an evolved NodeB (eNodeB).

For the sake of clarity, any internal electronics of the arrangement 500, not completely necessary for performing the present methods has been omitted from Figure 5.

The arrangement 500 comprises a receiver 505. The receiver 505 is adapted to receive data units and requests for a status report respectively, from the second node 130. The arrangement 500 also comprises a detecting unit. The detecting unit is adapted to detect if any data units, expected to have been received from the second node 130 are unreceived. Further, the arrangement 500 comprises a status report generating unit 502. The status report generating unit 502 is adapted to generate a status report, based on the made detection concerning the unreceived data units. Also, the arrangement 500 further comprises a buffer 503. The buffer 503 is adapted to buffer the generated status report. Still further, the arrangement 500 comprises an updating unit 504. The updating unit 504 is adapted to update the buffered status report when a change concerning either received data units or unreceived data units is detected. Further yet, the arrangement 500 comprises a transmitter 511. The transmitter 51 1 is adapted to transmit the status report to the second node 130, as a response to the received request for a status report.

The arrangement 500 may according to some optional embodiments comprise an incrementing unit 506. The incrementing unit 506 may be adapted to increment a trig counter value with one each time a status report is transmitted due to a received request.

Optionally, the arrangement 500 according to some embodiments may comprise an attaching unit 507. The attaching unit 507 may be adapted to attach the incremented trig counter value to the buffered status report.

According to some embodiments, the arrangement 500 may comprise a timer 508. The timer 508 may be adapted to measure the time that has passed since the latest status report where transmitted to the second node 130.

Some embodiments of the arrangement 500, which may be optional, may comprise a time control unit 509. The optional time control unit 509 may be adapted to control if the measured time exceeds a certain predetermined threshold value. The time control unit 509 thus may function as a watch dog timer.

In accordance with some optional embodiments of the arrangement 500, a trigger control unit 510 may be comprised. The trigger control unit 510 may be adapted to control if the incremented trig counter value of the status report is different from the trig counter value of the latest transmitted status report.

Some optional embodiments of the arrangement 500 may comprise a trig counter unit 512. The trig counter unit 512 may be adapted to count the number of received triggers for sending a status report.

Yet some optional embodiments of the arrangement 500 may comprise a processing unit 513. The processing unit 513 may be a Central Processing Unit (CPU), a microprocessor, a Peripheral Interface Controller (PIC) microcontroller or any other appropriate device which may be adapted to interpret computer program instructions and processes data.

It is to be noted that the described units 501-513 comprised within the arrangement 500 are to be regarded as separate logical entities but not with necessity separate physical entities. Any, some or all of the units 501-513 may be comprised or co-arranged within the same physical unit. However, in order to facilitate the understanding of the functionality of the arrangement 500, the comprised units 501-513 are illustrated as separate physical units in Figure 5.

### Some particular embodiments

The methods in the first node 110 for controlling a transmission of data units over a radio link between the first node 110 and a second node 130 may be implemented through one or more processors 513 in the first node 110, together with computer program code for performing the functions of the methods. The program code mentioned above may also be provided as a computer program product, for instance in the form of a data carrier carrying computer program code for performing the method steps according to the present methods and arrangements when being loaded into the processor unit 513. The data carrier may be a CD ROM disc, a memory stick, or any other appropriate medium such as a disk or tape that can hold machine readable data. The computer program code can furthermore be provided as pure program code on a server and downloaded to the first node 110 remotely.

Thus a computer program comprising instruction sets for performing the methods according to at least some of the method steps 401-412 may be used for implementing the previously described methods.

The present methods and arrangements 500 may be embodied e.g. as an arrangement 500 within a first node 110, a method or a computer program product. Accordingly, the present methods and arrangements may take the form of an entirely hardware embodiment, a software embodiment or an embodiment combining software and hardware aspects all generally referred to herein as a "circuit" or "module." Furthermore, the present methods and arrangements may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present methods and arrangements may be written in any arbitrary object oriented programming language such as Java®, Smalltalk or C++. However, the computer program code for carrying out the steps of the present methods may also be written in any conventional procedural programming languages, such as the "C" programming language and/or a lower level assembler language. The program code may execute entirely on the arrangement 500, partly on the arrangement 500, as a stand-alone software package, partly on the arrangement 500 and partly on a remote computing device or entirely on the remote computing device. In the latter scenario, the remote computing device may be connected to the arrangement 500 through a Local Area Network (LAN) or a Wide Area Network (WAN), or the connection may be made to an external computer, for example, through the Internet using e.g. an Internet Service Provider (ISP).

Furthermore, the present methods are described in part above with reference to flowchart illustrations in Figure 4 and/or block diagrams of arrangements in Figure 5, and computer program products according to embodiments of the present methods and arrangements. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks in Figure 4 or Figure 5.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The terminology used in the detailed description of the particular exemplary embodiments illustrated in the accompanying drawings is not intended to be limiting of the present methods and arrangements.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

## Claims

1. Method in a first node (110) for controlling a transmission of data units over a radio link between the first node (110) and a second node (130), the first node (110) and the second node (130) are comprised in a wireless communication system (100), the method is **characterized by** the steps of:
receiving (401) data units from the second node (130),
detecting (402) if any data units, expected to have been received from the second node (130), are unreceived,
generating (403) a status report, based on the made detection concerning unreceived data units,
buffering (404) the generated status report in a buffer (503),
updating (405) the buffered status report when a change concerning either received data units or unreceived data units is detected,
receiving (406) a request for a status report from the second node (130),
transmitting (412) the generated status report to the second node (130), as a response to the received request for a status report, wherein
the first node (110) comprises a trig counter (512), configured to count the number of status reports that has been sent as a response to received requests for status reports, and wherein the method comprises the further steps of:
incrementing (407) the trig counter value with one each time a status report is transmitted due to a received request, and attaching (408) the incremented trig counter value to the buffered status report, and
wherein the method comprises the further steps of: measuring (409) the time that has passed since the latest status report was transmitted to the second node (130), controlling (410) if the measured time exceeds a certain predetermined threshold value; and if it does, controlling (411) if the incremented trig counter value of the status report is different from the trig counter value of the latest transmitted status report; and if it does considering the buffered status report available for transmission.

2. Method according to any of the previous claim 1, wherein the step of transmitting (412) the status report to the second node (130) is performed only if the measured time exceeds a certain predetermined threshold value and if the incremented trig counter value of the status report is different from the trig counter value of the latest transmitted status report.

3. Method according to any of the claims 1-2 wherein the first node (110) is represented by user equipment such as e.g. a mobile phone.

4. Method according to any of the claims 1-3 wherein the first node (110) is represented by a base station, such as e.g. an evolved NodeB, "eNodeB".

5. Arrangement (500) in a first node (110) for controlling a transmission of data units over a radio link between the first node (110) and a second node (130), the first node (110) and the second node (130) are comprised in a wireless communication system (100), the arrangement (500) is **characterized by**:
a receiver (505), adapted to receive data units and requests for a status report respectively, from the second node (130),
a detecting unit (501), adapted to detect if any data units, expected to have been received from the second node (130) are unreceived,
a status report generating unit (502), adapted to generate a status report, based on the made detection concerning the unreceived data units,
a buffer (503), adapted to buffer the generated status report, an updating unit (504), adapted to update the buffered status report when a change concerning either received data units or unreceived data units is detected,
a transmitter (511), adapted to transmit the status report to the second node (130), as a response to the received request for a status report,
a trig counter (512), configured to count the number of status reports that has been sent as a response to received requests for status reports, and wherein the trig counter value is incremented with one each time a status report is transmitted due to a received request, and the incremented trig counter value is attached to the buffered status report, and
a timer (508) for measuring the time that has passed since the latest status report was transmitted to the second node (130), wherein if the measured time exceeds a certain predetermined threshold value; and if the incremented trig counter value of the status report is different from the trig counter value of the latest transmitted status report, the buffered status report is considered available for transmission.

6. Arrangement (500) according to claim 5, wherein the first node (110) is represented by user equipment such as e.g. a mobile phone.

7. Arrangement (500) according to claim 5, wherein the first node (110) is represented by a base station, such as e.g. an evolved NodeB, "eNodeB".

## Patentansprüche

1. Ein Verfahren in einem ersten Knoten (110) zum Steuern einer Übertragung von Dateneinheiten über eine Funkverbindung zwischen dem ersten Knoten (110) und einem zweiten Knoten (130), wobei der erste Knoten (110) und ein zweiter Knoten (130) in einem drahtlosen Kommunikationssystem (100) enthalten sind, wobei das Verfahren durch die folgenden Schritte gekennzeichnet ist:
Empfangen (401) von Dateneinheiten von dem zweiten Knoten (130),
Detektieren (402), falls irgendwelche Dateneinheiten, von denen erwartet wird, dass sie von dem zweiten Knoten (130) empfangen wurden, nicht empfangen wurden,
Erzeugen (403) eines Statusberichts auf Grundlage der getätigten Detektion bezüglich nicht-empfangener Dateneinheiten,
Zwischenspeichern (404) des erzeugten Statusberichts in einem Buffer (503),
Aktualisieren (405) des zwischengespeicherten Statusberichts, wenn eine Änderung bezüglich entweder empfangener Dateneinheiten oder nicht-empfangener Dateneinheiten detektiert wird,
Empfangen (406) einer Anforderung für einen Statusbericht von dem zweiten Knoten (130),
Übertragen (412) des erzeugten Statusberichts an den zweiten Knoten (130), als Antwort auf die empfangene Anforderung für einen Statusbericht, wobei der erste Knoten (110) einen Trig-Zähler (512) umfasst, der konfiguriert ist zum Zählen der Anzahl von Statusberichten, die gesendet wurden als Antwort auf die empfangenen Anforderungen für Statusberichte, und wobei das Verfahren die weiteren Schritte umfasst:
Erhöhen (407) des Trig-Zähler-Werts um eins jedes Mal, wenn ein Statusbericht übertragen wird aufgrund einer empfangenen Anforderung, und Hinzufügen (408) des erhöhten Trig-Zähler-Werts zu dem zwischengespeicherten Statusbericht, und
wobei das Verfahren die weiteren Schritte umfasst:
Messen (409) der Zeit, die abgelaufen ist, seit der letzte Statusbericht übertragen wurde an den zweiten Knoten (130), Steuern (410), falls die gemessene Zeit einen gewissen vorbestimmten Schwellenwert überschreitet; und falls dies zutrifft, Steuern (411), falls der erhöhte Trig-Zähler-Wert des Statusberichts unterschiedlich von dem Trig-Zähler-Wert des letzten übertragenen Statusberichts ist; und falls dies zutrifft, Betrachten des zwischengespeicherten Statusberichts als verfügbar für die Übertragung.

2. Verfahren nach Anspruch 1, wobei der Schritt eines Übertragens (412) des Statusberichts an den zweiten Knoten (130) ausgeführt wird, nur falls die gemessene Zeit einen gewissen vorbestimmten Schwellenwert überschreitet, und falls der erhöhte Trig-Zähler-Wert des Statusberichts unterschiedlich ist von dem Trig-Zähler-Wert des letzten übertragenen Statusberichts.

3. Verfahren nach einem der Ansprüche 1-2, wobei der erste Knoten (110) repräsentiert wird durch ein Benutzergerät, wie z. B. ein Mobiltelefon.

4. Verfahren nach einem der Ansprüche 1-3, wobei der erste Knoten (110) repräsentiert wird durch eine Basisstation, wie z. B. ein fortschrittlicher NodeB, "eNodeB".

5. Anordnung (500) in einem ersten Knoten (110) zum Steuern einer Übertragung von Dateneinheiten über eine Funkverbindung zwischen dem ersten Knoten (110) und einem zweiten Knoten (130), wobei der erste Knoten (110) und der zweite Knoten (130) in einem drahtlosen Kommunikationssystem (100) enthalten sind, wobei die Anordnung (500) **gekennzeichnet ist durch**
einen Empfänger (505), ausgebildet zum Empfangen von Dateneinheiten und Anforderungen für einen Statusbericht von dem zweiten Knoten (130),
eine Detektiereinheit (501), ausgebildet zum Detektieren, falls irgendwelche Dateneinheiten, von denen erwartet wird, dass sie von dem zweiten Knoten (130) empfangen wurden, nicht empfangen wurden,
eine Statusbericht-Erzeugungseinheit (502), ausgebildet zum Erzeugen eines Statusberichts auf Grundlage der durchgeführten Detektion bezüglich der nicht-empfangenen Dateneinheiten,
einen Buffer (503), ausgebildet zum Zwischenspeichern des erzeugten Statusberichts,
eine Aktualisiereinheit (504), ausgebildet zum Aktualisieren des zwischengespeicherten Statusberichts, wenn eine Änderung bezüglich entweder empfangener Dateneinheiten oder nicht-empfangener Dateneinheiten detektiert wird,
einen Sender (511), ausgebildet zum Übertragen des Statusberichts an den zweiten Knoten (130) als Antwort auf die empfangene Anforderung für einen Statusbericht,
einen Trig-Zähler (512), konfiguriert zum Zählen der Anzahl von Statusberichten, die gesendet wurde als Antwort auf empfangene Anforderungen für Statusberichte, und wobei der Trig-Zähler-Wert erhöht wird um eins jedes Mal, wenn ein Statusbericht empfangen wird aufgrund einer empfangenen Anforderung, und der erhöhte Trig-Zähler-Wert hinzugefügt wird zu dem zwischengespeicherten Statusbericht, und
einen Timer (508) zum Messen der Zeit, die abgelaufen ist seit der letzte Statusbericht an den zweiten Knoten (130) übertragen wurde, wobei falls die gemessene Zeit einen gewissen vorbestimmten Schwellenwert überschreitet; und falls der erhöhte Trig-Zähler-Wert des Statusberichts unterschiedlich ist zu dem Trig-Zähler-Wert des letzten übertragenen Statusberichts, der zwischengespeicherte Statusbericht als verfügbar für die Übertragung betrachtet wird.

6. Die Anordnung (500) nach Anspruch 5, wobei der erste Knoten (110) repräsentiert wird durch ein Benutzergerät, wie z. B. ein Mobiltelefon.

7. Die Anordnung (500) nach Anspruch 5, wobei der erste Knoten (110) repräsentiert wird durch eine Basisstation, wie z. B. ein fortschrittlicher NodeB, "eNodeB".

## Revendications

1. Procédé dans un premier noeud (110) pour commander une transmission d'unités de données sur une liaison radio entre le premier noeud (110) et un deuxième noeud (130), le premier noeud (110) et le deuxième noeud (130) étant inclus dans un système de communication sans fil (100), le procédé étant **caractérisé par** les étapes consistant à :
recevoir (401) des unités de données à partir du deuxième noeud (130),
détecter (402) si de quelconques unités de données, dont il est prévu qu'elles ont été reçues à partir du deuxième noeud (130), ne sont pas reçues,
générer (403) un rapport d'état, en fonction de la détection effectuée concernant des unités de données non reçues,
mettre en mémoire tampon (404) le rapport d'état généré dans une mémoire tampon (503),
remettre à jour (405) le rapport d'état mis en mémoire tampon lorsqu'un changement concernant soit des unités de données reçues soit des unités de données non reçues est détecté,
recevoir (406) une demande pour un rapport d'état à partir du deuxième noeud (130),
transmettre (412) le rapport d'état généré au deuxième noeud (130), en réponse à la demande reçue pour un rapport d'état,
le premier noeud (110) comprenant un compteur de déclenchement (512), configuré pour compter le nombre de rapports d'état qui a été envoyé en réponse à des demandes reçues pour des rapports d'état, et le procédé comprenant les étapes additionnelles consistant à :
incrémenter (407) la valeur de compteur de déclenchement de un à chaque fois qu'un rapport d'état est transmis du fait d'une demande reçue, et attacher (408) la valeur de compteur de déclenchement incrémentée au rapport d'état mis en mémoire tampon, et
le procédé comprenant les étapes supplémentaires consistant à : mesurer (409) le temps qui s'est écoulé depuis que le dernier rapport d'état a été transmis au deuxième noeud (130), contrôler (410) si le temps mesuré dépasse une certaine valeur de seuil prédéterminée ; et, si c'est le cas, contrôler (411) si la valeur de compteur de déclenchement incrémentée du rapport d'état est différente de la valeur de compteur de déclenchement du dernier rapport d'état transmis ; et, si c'est le cas, considérer le rapport d'état mis en mémoire tampon comme disponible pour la transmission.

2. Procédé selon la revendication 1, dans lequel l'étape de transmission (412) du rapport d'état au deuxième noeud (130) n'est effectuée que si le temps mesuré dépasse une certaine valeur de seuil prédéterminée et si la valeur de compteur de déclenchement incrémentée du rapport d'état est différente de la valeur de compteur de déclenchement du dernier rapport d'état transmis.

3. Procédé selon l'une quelconque des revendications 1 et 2, dans lequel le premier noeud (110) est représenté par un équipement d'utilisateur, tel que, par exemple, un téléphone mobile.

4. Procédé selon l'une quelconque des revendications 1 à 3, dans lequel le premier noeud (110) est représenté par une station de base, telle que, par exemple, un NoeudB évolué, "eNoeudB".

5. Agencement (500) dans un premier noeud (110) pour commander une transmission d'unités de données sur une liaison radio entre le premier noeud (110) et un deuxième noeud (130), le premier noeud (110) et le deuxième noeud (130) étant inclus dans un système de communication sans fil (100), l'agencement (500) étant **caractérisé par** :
un récepteur (505), conçu pour recevoir des unités de données et des demandes pour un rapport d'état, respectivement, à partir du deuxième noeud (130),
une unité de détection (501), conçue pour détecter si de quelconques unités de données, dont il est prévu qu'elles ont été reçues à partir du deuxième noeud (130), ne sont pas reçues,
une unité de génération de rapport d'état (502), conçue pour générer un rapport d'état, en fonction de la détection effectuée concernant les unités de données non reçues,
une mémoire tampon (503), conçue pour mettre en mémoire tampon le rapport d'état généré, une unité de remise à jour (504), conçue pour mettre à jour le rapport d'état mis en mémoire tampon lorsqu'un changement concernant soit des unités de données reçues soit des unités de données non reçues est détecté,
un dispositif de transmission (511), conçu pour transmettre le rapport d'état au deuxième noeud (130), en réponse à la demande reçue pour un rapport d'état,
un compteur de déclenchement (512), configuré pour compter le nombre de rapports d'état qui a été envoyé en réponse à des demandes reçues pour des rapports d'état, et dans lequel la valeur de compteur de déclenchement est incrémentée de un à chaque fois qu'un rapport d'état est transmis du fait d'une demande reçue, et la valeur de compteur de déclenchement incrémentée est attachée au rapport d'état mis en mémoire tampon, et
un minuteur (508) pour mesurer le temps qui s'est écoulé depuis que le dernier rapport d'état a été transmis au deuxième noeud (130), dans lequel, si le temps mesuré dépasse une certaine valeur de seuil prédéterminée ; et si la valeur de compteur de déclenchement incrémentée du rapport d'état est différente de la valeur de compteur de déclenchement du dernier rapport d'état transmise ; le rapport d'état mis en mémoire tampon est considéré comme disponible pour la transmission.

6. Agencement (500) selon la revendication 5, dans lequel le premier noeud (110) est représenté par un équipement d'utilisateur, tel que, par exemple, un téléphone mobile.

7. Agencement (500) selon la revendication 5, dans lequel le premier noeud (110) est représenté par une station de base, telle que, par exemple, un NoeudB évolué, "eNoeudB".
